# EUROPEAN PATENT APPLICATION

(11) **EP 4 760 651 A1**
(43) Date of publication of application: **17.06.2026**
(21) Application number: 24882938.4
(22) Date of filing: 20.08.2024
(51) Int. Cl.: G06V 10/762, G06V 40/16, G06V 10/82

(54) **ELECTRONIC DEVICE AND METHOD FOR CLUSTERING DATA IN ELECTRONIC DEVICE**

(30) Priority: 27.10.2023 KR 20230145328; 21.11.2023 KR 20230161889
(71) Applicant: Samsung Electronics Co., Ltd., Suwon-si, Gyeonggi-do 16677 (KR)
(72) Inventor: KIM, Eunyoung, Suwon-si, Gyeonggi-do 16677 (KR); KIM, Jihyun, Suwon-si, Gyeonggi-do 16677 (KR)
(74) Representative: Gulde & Partner
(86) International application number: PCT/KR2024/096056
(87) International publication number: WO 2025/089912

(57) **Abstract**

Disclosed are techniques for an electronic device and a method for clustering face image data in an electronic device. When a second cluster generation unit generates a new second cluster, a plurality of first clusters generated by a first cluster generation unit and a plurality of second clusters generated by the second cluster generation unit are compared, and a third cluster may be generated on the basis of the comparison by merging a first cluster including first face feature data among the plurality of first clusters and a second cluster including the first face feature data among the plurality of second clusters.

## Description

### [Technical Field]

The disclosure relates to an electronic device and a method for clustering data in the electronic device.

### [Background Art]

When an electronic device recognizes a face in a captured image, it may detect first face feature data corresponding to the recognized face, and when the detected first face feature data are accumulated, generate a cluster including only face feature data of the same person.

Upon detection of second face feature data in a captured image, the electronic device may compare the second face feature data with face feature data included in each of a plurality of clusters pre-generated on a person basis, and update a cluster by including the second face feature data in a pre-generated cluster including face feature data identical to the second face feature data.

However, in the case where face feature data of a third person different from a second person is included in the pre-generated cluster, if the face feature data of the third person included in the pre-generated cluster matches third face feature data detected from an image captured by the electronic device, the face feature data of the third person may increase in the pre-generated cluster.

### [Detailed Description of the Invention]

### [Technical Solution]

An electronic device may improve the precision and recall of a cluster including face feature data of the same person.

An electronic device according to an embodiment may include a first cluster generator configured to generate at least one first cluster including face feature data for each person, a second cluster generator configured to generate a plurality of second clusters including face feature data for each person, a processor, and memory storing instructions. The instructions according to an embodiment may, when executed by the processor, cause the electronic device to, when a new second cluster is generated by the second cluster generator, compare a plurality of first clusters generated by the first cluster generator with the plurality of second clusters generated by the second cluster generator. The instructions according to an embodiment may, when executed by the processor, cause the electronic device to, based on the comparison, generate a third cluster by merging a first cluster including first face feature data among the plurality of first clusters and a second cluster including the first face feature data among the plurality of second clusters.

A method for clustering data in an electronic device according to an embodiment may include identifying that a new second cluster is generated by a second cluster generator configured to generate a plurality of second clusters including face feature data for each person. The method according to an embodiment may include comparing a plurality of first clusters generated by a first cluster generator configured to generate one first cluster including face feature data for each person with the plurality of second clusters generated by the second cluster generator. The method according to an embodiment may include, based on the comparison, generating a third cluster by merging a first cluster including first face feature data among the plurality of first clusters and a second cluster including the first face feature data among the plurality of second clusters.

In a non-transitory storage medium storing instructions according to an embodiment, the instructions may, when executed by an electronic device, cause the electronic device to perform at least one operation. The at least one operation according to an embodiment may include identifying that a new second cluster is generated by a second cluster generator configured to generate a plurality of second clusters including face feature data for each person. The at least one operation according to an embodiment may include comparing a plurality of first clusters generated by a first cluster generator configured to generate one first cluster including face feature data for each person with the plurality of second clusters generated by the second cluster generator. The at least one operation according to an embodiment may include, based on the comparison, generating a third cluster by merging a first cluster including first face feature data among the plurality of first clusters and a second cluster including the first face feature data among the plurality of second clusters.

### [Brief Description of Drawings]

FIG. 1 is a block diagram illustrating an electronic device in a network environment according to an embodiment.
FIG. 2 is a block diagram illustrating an electronic device according to an embodiment.
FIGS. 3A, 3B, 3C, 3D, 3E, and 3F are diagrams illustrating an operation of merging a first cluster and a second cluster in an electronic device according to an embodiment.
FIGS. 4A, 4B, 4C, and 4D are diagrams illustrating an operation of merging a first cluster and a second cluster in an electronic device according to an embodiment.
FIG. 5 is a flowchart illustrating an operation of generating a first cluster by a first cluster generator in an electronic device according to an embodiment.
FIG. 6 is a flowchart illustrating an operation of generating a second cluster by a second cluster generator in an electronic device according to an embodiment.
FIG. 7 is a flowchart illustrating an operation of clustering face feature data for each person in an electronic device according to an embodiment.
FIG. 8 is a flowchart illustrating an operation of clustering face feature data for each person in an electronic device according to an embodiment.

### [Mode for Carrying out the Invention]

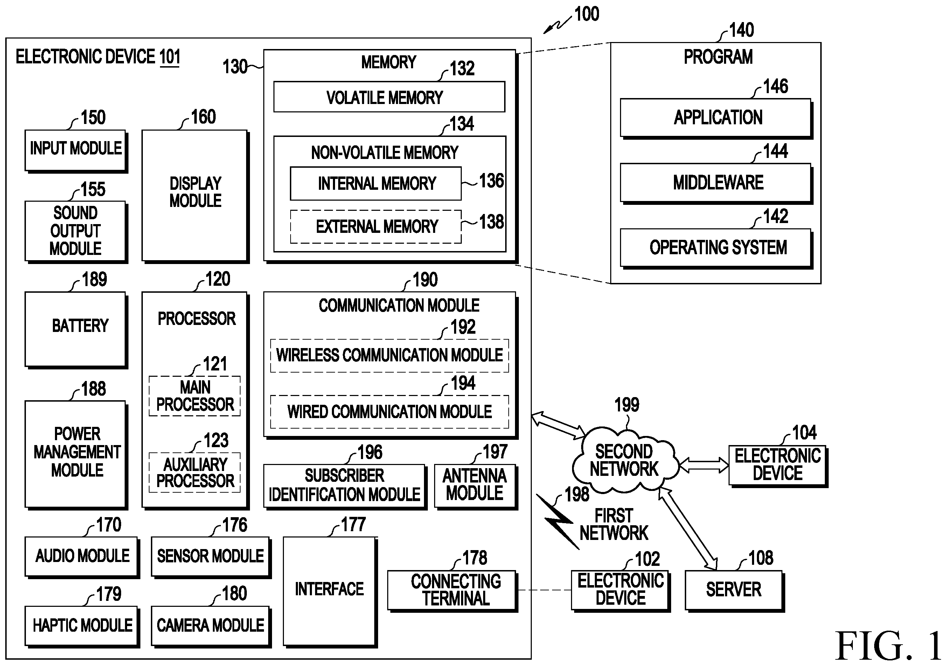

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

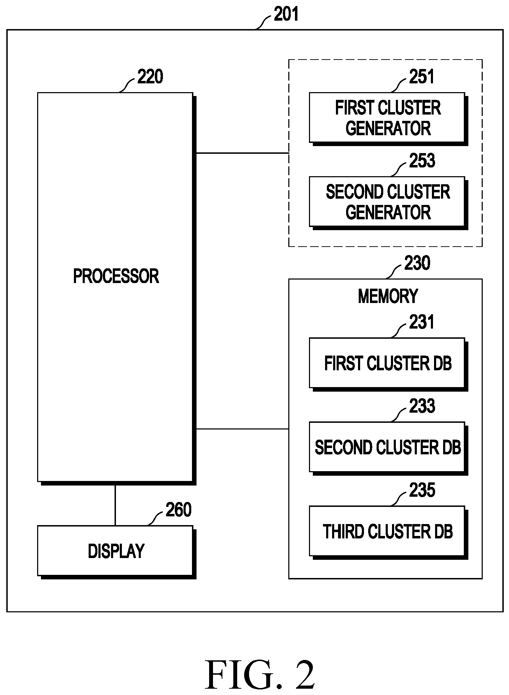

FIG. 2 is a block diagram illustrating an electronic device according to an embodiment.

Referring to FIG. 2, an electronic device 201 may include a processor 220, memory 230, a first cluster generator 251, a second cluster generator 253, and a display 260.

According to an embodiment, the first cluster generator 251 may generate at least one first cluster identified as certain, for each person.

According to an embodiment, the first cluster generator 251 may include a first artificial intelligence (AI) model trained to include only face feature data of the same person identified as certain in at least one first cluster to increase precision, and to leave all face feature data not identified as certain in an unclassified state. For example, the first AI model may include a machine learning model. The precision represents a ratio of actual positive values to predicted positive values, and increases as only highly certain cases are predicted as positive. Since the at least one first cluster generated for each person through the first cluster generator 251 includes only certain face feature data, the accuracy of the first cluster may increase. However, as unclassified face feature data which are not identified as certain increase, a search rate for the same person in a face search operation may decrease.

According to an embodiment, the first cluster generator 251 may be driven in the background only once a day on a day when new face feature data is stored in the memory 230, and may be driven under the control of the processor 220, when at least one of a plurality of conditions for driving the first cluster generator is satisfied. Although it is described that the first cluster generator 251 runs in the background once a day on a day when new data is stored, the disclosure is not limited thereto, and the first cluster generator 251 may be driven in the background or foreground a specified number of times on a specified day other than a day when new face feature data is stored, depending on various situations such as the performance of the electronic device or user settings.

According to an embodiment, the plurality of conditions for driving the first cluster generator may include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

According to an embodiment, when at least one of the plurality of conditions for driving the first cluster generator 251 is satisfied, the first cluster generator 251 may assign an initialization value (e.g., cluster1_id_-1) to set the state of the new face feature data, the state of face feature data stored in the memory 230 that has not been clustered by the first cluster generator 251, and the state of face feature data included in each of a plurality of first clusters (e.g., cluster1_id_0 and cluster1_id_1) stored in the memory 230 to an unclassified state. According to an embodiment, the first cluster generator 251 may compare all face feature data initialized (e.g., cluster1_id_-1) to the unclassified state with each other, and based on the result of the comparison, generate a new first cluster (e.g., cluster1_id_2) including face feature data identified as certain on a person basis or update the existing first clusters (e.g., cluster1_id_0 and/or cluster1_id_1) stored in the memory 130 by modifying them.

According to an embodiment, the second cluster generator 253 may generate a plurality of second clusters for each person.

According to an embodiment, the second cluster generator 253 may include a second AI model trained to include a plurality of second clusters including face feature data of the same person to increase both precision and recall. For example, the first AI model may include a machine learning model. The recall represents a ratio of actual positive values to predicted positive values, and as more positive predictions are made, the recall increases. According to an embodiment, while the second cluster generator 253 may improve accuracy by generating a plurality of second clusters (e.g., 4 clusters) each including a first specified number (e.g., 6) of face feature data of the same person, fragmentation may increase due to the generation of the plurality of clusters including face feature data of the same person.

According to an embodiment, when it is identified that a second specified number (e.g., 10) or more of new face feature data have been stored in the memory 230, the second cluster generator 253 may be driven under the control of the processor 220.

According to an embodiment, the second cluster generator 253 may assign an initialization value (e.g., cluster2_id_-1) to the new face feature data stored in the memory 230 and assign an initialization value (e.g., cluster2_id_-1) to face feature data that remain unclassified because they were not clustered by the second cluster generator 253.

According to an embodiment, the second cluster generator 253 may detect at least one second cluster (e.g., cluster2_id_0 and cluster2_id_4) including a third specified number (e.g., 10) or more of face feature data among a plurality of second clusters (e.g., cluster2_id_0, cluster2_id_1, cluster2_id_2, cluster2_id_3, and cluster2_id_4) stored in the memory 230.

According to an embodiment, the second cluster generator 253 may generate at least one new second cluster (e.g., cluster2_id_5 and cluster2_id_6) including face feature data determined to be identical to the face feature data included in each of the at least one second cluster (e.g., cluster2_id_0 and cluster2_id_4) including the third specified number (e.g., 10) or more of face feature data among the data to which the initialization value (e.g., cluster2_id_-1) has been assigned.

According to an embodiment, the second cluster generator 253 may compare the face feature data included in each of at least one second cluster (e.g., cluster2_id_1, cluster2_id_2, and cluster2_id_3) including the third specified number or fewer of face feature data with the face feature data assigned with the initialization value among the plurality of second clusters (e.g., cluster2_id_0, cluster2_id_1, cluster2_id_2, cluster2_id_3, and cluster2_id_4) stored in the memory 230. According to an embodiment, based on the result of the comparison, the second cluster generator 253 may update at least one second cluster (e.g., cluster2_id_1, cluster2_id_2, and cluster2_id_3) having the same face feature data as the face feature data assigned with the initialization value (e.g., cluster2_id_-1) among the at least one second cluster (e.g., cluster2_id_1, cluster2_id_2, and cluster2_id_3) including the third specified number (e.g., 10) or fewer of face feature data by including new face feature data in the at least one second cluster.

The operation of driving the second cluster generator 253 may be described through <Table 1> to <Table 4> below, by way of example.

**[Table 1]**

| Cluster2_id | count |
|---|---|
| -1 | 100 |
| 0 | 40 |
| 1 | 3 |
| 2 | 10 |
| 3 | 7 |
| 4 | 13 |

Table 1 illustrates 100 face feature data assigned with the initialization value "cluster2_id_-1" representing an unclassified state not clustered by the second cluster generator 253, which are stored in the memory 230, "cluster2_id_0" including 40 face feature data, "cluster2_id_1" including 3 face feature data, "cluster2_id_2" including 10 face feature data, "cluster2_id_3" including 7 face feature data, and "cluster2_id_4" including 13 face feature data.

**[Table 2]**

| Cluster2_id | count | pick |
|---|---|---|
| -1 | 100+10 | |
| 0 | 40 | x |
| 1 | 3 | 3 |
| 2 | 10 | 10 |
| 3 | 7 | 7 |
| 4 | 13 | x |

According to an embodiment, when the second specified number of, that is, 10 new face feature data are stored in the memory 230, the second cluster generator 253 may add the 10 new face feature data to the 100 unclassified face feature data not clustered by the second cluster generator and assign the initialization value "cluster2_id_-1" to them, as illustrated in <Table 2>. According to an embodiment, the second cluster generator 253 may detect "cluster2_id_1", "cluster2_id_2", and "cluster2_id_3", which include the third specified number or fewer of face feature data, that is, 10 or fewer face feature data among the plurality of second clusters "cluster2_id_0, cluster2_id_1, cluster2_id_2, cluster2_id_3, and cluster2_id_4", pick the 3 face feature data in "cluster2_id_1", the 10 face feature data in "cluster2_id_2", and the 7 face feature data in "cluster2_id_3" as data to be compared with the 110 face feature data assigned with the initialization value "cluster2_id_-1". According to an embodiment, the second cluster generator 253 may detect "cluster2_id_0" and "cluster2_id_4", which include the third specified number or more of feature data, that is, 10 or more face feature data, and exclude "cluster2_id_0" and "cluster2_id_4" from target second clusters that may be updated by comparison with the 110 face feature data assigned with the initialization value "cluster2_id_-1".

**[Table 3]**

| Clustering Result | Final count | Notes |
|---|---|---|
| -20 | 90 | |
| +5 | 5 | new cluster2_id |
| +4 | 7 | |
| +3 | 13 | |
| 0 | 7 | |
| +13 | 13 | new cluster2_id |

Referring to <Table 3>, according to an embodiment, the second cluster generator 253 may compare the 3 face feature data included in "cluster2_id_1", the 10 face feature data included in "cluster2_id_2", and the 7 face feature data included in "cluster2_id_3" with the 110 face feature data assigned with the initialization value "cluster2_id_-1", and based on the result of the comparison, may detect 4 new face feature data to eventually include 7 face feature data in "cluster2_id_-1", detect 3 new face feature data to eventually include 13 face feature data in "cluster2_id_-2", and fail to detect new face feature data to eventually include 7 face feature data in "cluster2_id_-3". According to an embodiment, the second cluster generator 253 may detect 5 face feature data including face feature data included in "cluster2_id_0" among the 110 face feature data assigned with the initialization value "cluster2_id_-1", and generate a new second cluster "cluster2_id_5". According to an embodiment, the second cluster generator 253 may detect 13 face feature data including face feature data included in "cluster2_id_4" among the 110 face feature data assigned with the initialization value "cluster2_id_-1", and generate a new second cluster "cluster2_id_6". According to an embodiment, based on the clustering result of the second cluster generator 253, the second cluster generator 253 may reduce the number of face feature data assigned with the initialization value "cluster2_id_-1" to 90.

**[Table 4]**

| Cluster2_id | count |
|---|---|
| -1 | 90 |
| 0 | 40 |
| 1 | 7 |
| 2 | 13 |
| 3 | 7 |
| 4 | 13 |
| 5 | 5 |
| 6 | 13 |

As illustrated in <Table 4>, based on the clustering result of the second cluster generator 253, the 110 unclassified face feature data assigned with the initialization value "cluster2_id_-1" may be changed to 90. Among the plurality of the existing generated second clusters, "cluster2_id_0" may maintain to include 40 face feature data, "cluster2_id_1" may be changed to include 7 face feature data, "cluster2_id_2" may be changed to include 13 face feature data, "cluster2_id_3" may be maintained to include 7 face feature data, and "cluster2_id_4" may be maintained to include 13 face feature data, and "cluster2_id_5" newly including 5 face feature data and "cluster2_id_6" newly including 13 face feature data may be added. According to an embodiment, the processor 220 may perform an overall control operation for the electronic device 201.

According to an embodiment, when at least one of the plurality of conditions for driving the first cluster generator is satisfied, the processor 220 may drive the first cluster generator 251 once a day on a day when new face feature data is stored in the memory 230.

According to an embodiment, when the second specified number or more of new face feature data are stored in the memory 230, the processor 220 may drive the second cluster generator 253.

According to an embodiment, when the processor 220 receives a new image (e.g., via capturing and/or downloading) in the electronic device 201, recognizes a face in the new image using a face recognition engine, and detects face feature data from the recognized face image, it may store the detected face feature data in the memory 230.

According to an embodiment, the processor 220 may detect a face region from the recognized face image and detect face feature data related to the shape of the face and the positions of the eyes, the nose, and the mouth from the detected face region.

According to an embodiment, upon identifying generation of a new second cluster by the second cluster generator 253, the processor 220 may compare a plurality of first clusters generated by the first cluster generator 251 with a plurality of second clusters generated by the second cluster generator 253, and generate a third cluster by merging a first cluster and a second cluster based on the result of the comparison.

According to an embodiment, the processor 220 may generate a third cluster by merging a first cluster and a second cluster that include the same face feature data among the plurality of first clusters and the plurality of second clusters.

According to an embodiment, the processor 220 may detect a first cluster including first face feature data among the plurality of first clusters and at least one second cluster including the first face feature data among the plurality of second clusters, and generate a third cluster by merging the first cluster and the second cluster including the same first face feature data.

According to an embodiment, the processor 220 may assign the same identification information (e.g., identification number) of the merged first cluster to the generated third cluster.

The operation of merging a first cluster and a second cluster may be described through <Table 5> below, by way of example.

**[Table 5]**

| Face feature id | Cluster1 _id | Cluster2 _id | Cluster3 _id |
|---|---|---|---|
| 1 | -1 | -1 | -1 |
| 2 | 0 | 0 | 0 |
| 3 | 0 | 0 | 0 |
| 4 | -1 | 1 | 1 |
| 5 | 1 | 1 | 1 |
| 6 | 0 | 2 | 0 |
| 7 | 1 | 1 | 1 |
| 8 | 1 | 3 | 1 |
| 9 | -1 | 2 | 0 |
| 10 | -1 | 2 | 0 |

Referring to <Table 5>, According to an embodiment, the processor 220 may identify that "cluster 1_id_-1" not clustered by the first cluster generator 251 includes face feature data corresponding to face feature ids 1, 4, 9, and 10, respectively, "cluster 1_id_0" among the plurality of first clusters includes face feature data corresponding to face feature ids 2, 3, and 6, respectively, and "cluster 1_id_1" among the plurality of first clusters includes face feature data corresponding to face feature ids 5, 7, and 8, respectively. According to an embodiment, the processor 220 may identify that "cluster 2_id_-1" not clustered by the second cluster generator 253 includes face feature data corresponding to face feature id 1, "cluster 1_id_0" among the plurality of second clusters includes face feature data corresponding to face feature ids 2 and 3, respectively, "cluster 1_id_1" among the plurality of second clusters includes face feature data corresponding to face feature ids 4, 5, and 7, respectively, "cluster 1_id_2" among the plurality of second clusters includes face feature data corresponding to face feature ids 6, 9, and 10, respectively, and "cluster 1_id_3" among the plurality of second clusters includes face feature data corresponding to face feature id 8. According to an embodiment, based on the results of "cluster 1_id _-1" not clustered by the first cluster generator 251, the plurality of first clusters (cluster 1_id_0 and cluster 1_id_1), "cluster 2_id_-1" not clustered by the second cluster generator 253, and the plurality of second clusters (cluster 2_id_0, cluster 2_id_1, cluster 2_id_2, and cluster 3_id_3), the processor 220 may detect "cluster 2_id_0" and "cluster 2_id_2" that include face feature ids 2, 3, and 6 included in "cluster 1_id_0". According to an embodiment, the processor 220 may generate "cluster 3_id_0" assigned with identification number "0" of cluster 1_id_0 by merging "cluster 1_id_0" with "cluster 2_id_0", and generate "cluster 3_id_0" assigned with identification number "0" of cluster 1_id_0 by merging "cluster 1_id_0" with "cluster 2_id_2".

According to an embodiment, the processor 220 may detect "cluster 2_id_1" and "cluster 2_id_3" that include face feature ids 5, 7, and 8 included in "cluster 1_id_1". According to an embodiment, the processor 220 may generate "cluster 3_id_1" assigned with identification number "1" of cluster 1_id_1 by merging "cluster 1_id_1" with "cluster 2_id_1", and generate "cluster 3_id_1" assigned with identification number "1" of "cluster 1_id_1" by merging "cluster 1_id_1" with "cluster 2_id_3".

According to an embodiment, the processor 220 may drive the first cluster generator 251 and the second cluster generator 253 according to input of new face detection data, generate and store a third cluster by merging a high-precision first cluster generated by the first cluster generator 251 with a high-precision and high-recall second cluster generated by the second cluster generator 253 based on the same face feature data, and use the third cluster when performing a face search operation.

According to an embodiment, upon identifying a second cluster not merged with the plurality of first clusters among the plurality of second clusters, the processor 220 may detect a first cluster to be compared with the second cluster based on time, and generate a third cluster by merging the detected first cluster and the unmerged second cluster.

According to an embodiment, based on a time criterion, the processor 220 may identify a first cluster that shares at least one of the same image acquisition date or image acquisition time with the unmerged second cluster as a first cluster to be compared with the unmerged second cluster.

According to an embodiment, the processor 220 may identify a second cluster to be compared with the unmerged second cluster based not only on the time criterion but also on a location criterion and/or scene criterion of an image from which face feature data are detected.

According to an embodiment, when a calculated similarity score between the face feature data in the detected first cluster and the face feature data in the unmerged second cluster is greater than or equal to a reference score (e.g., 75%), the processor 220 may generate a third cluster by merging the detected first cluster and the unmerged second cluster. According to an embodiment, when all calculated similarity scores between the face feature data in the detected first cluster and the face feature data in the unmerged second cluster are greater than or equal to the reference score (e.g., 75%), the processor 220 may generate the third cluster by merging the detected first cluster and the unmerged second cluster.

According to an embodiment, when the calculated similarity score between the face feature data in the detected first cluster and the face feature data in the unmerged second cluster is less than or equal to the reference score (e.g., 75%), the processor 220 may not merge the detected first cluster and the unmerged second cluster. According to an embodiment, when at least one face feature data has a similarity score calculated between the face feature data in the detected first cluster and the face feature data in the unmerged second cluster, which is equal to or less than the reference score, the processor 220 may not merge the detected first cluster and the unmerged second cluster.

According to an embodiment, the processor 220 detect a fourth specified number (e.g., 3) of face feature data from the face feature data of the first cluster and a fifth specified number (e.g., 5) of face feature data from the face feature data of the unmerged second cluster to determine the five specified number (e.g., 5) of "face pairs (faceₓ, face_{y})". According to an embodiment, the processor 220 determine whether to merge the detected first cluster and the unmerged second cluster by comparing similarity scores calculated between faceₓ representing the face feature data of the first cluster and face_{y} representing the face feature data of the second cluster with the reference score. According to an embodiment, to increase accuracy, the processor 220 may fix the fifth specified number of face feature data detected from the second cluster to, for example, 5 and flexibly set the fourth specified number of face feature data detected from the first cluster to be less than or equal to the fifth specified number, for example, to 3 to 5.

According to an embodiment, when the fourth specified number of face feature data detected from the detected first cluster is not equal to the fifth specified number of face feature data detected from the unmerged second cluster, the processor 220 determine the fifth specified number (e.g., 5) of "face pairs (faceₓ, face_{y})" by duplicating face feature data detected from the detected first cluster.

For example, when the face feature ids included in the detected first cluster are "1, 12, and 13" and the face feature ids included in the unmerged second cluster are "2, 3, 5, 7, and 9," the processor 220 may determine "face pair(1, 2), face pair(12, 3), face pair(12, 3), face pair(23, 7), and face pair(23, 9), and compare similarity scores calculated in the face pairs. When all five pairs have similarity scores equal to or greater than the reference score as a result of the comparison, the processor 220 may generate a third cluster by merging the detected first cluster and the unmerged second cluster, as illustrated in <Table 6> below.

**[Table 6]**

| Cluster 2_face feature id | Cluster 1_Face feature id | Results |
|---|---|---|
| 1 | 2 | O |
| 12 | 3 | O |
| 12 | 5 | O |
| 23 | 7 | O |
| 23 | 9 | O |

When the processor 220 identifies that the similarity score of "face pair(1, 2)" is equal to or greater than the reference score, and the similarity score of "face pair(12, 3)" is less than or equal to the reference score as a result of the comparison, the processor 220 may not merge the detected first cluster with the unmerged second cluster without the comparison of similarity scores against the reference score for face pair(12, 3), face pair(23, 7), and face pair(23, 9).

**[Table 7]**

| Cluster 2_face feature id | Cluster 1_Face feature id | Results |
|---|---|---|
| 1 | 2 | O |
| 12 | 3 | X |
| 12 | 5 | skip |
| 23 | 7 | Skip |
| 23 | 9 | Skip |

According to an embodiment, the memory 230 (e.g., the memory 130 of FIG. 1) may include a first cluster DB 231, a second cluster DB 233, and a third cluster DB 235. According to an embodiment, the first cluster DB 231 may store a plurality of first clusters including at least one first cluster for each person generated through the operation of the first cluster generator 251.

According to an embodiment, the second cluster DB 233 may store a plurality of second clusters including a plurality of clusters for each person generated through the operation of the second cluster generator 253.

According to an embodiment, the third cluster DB 235 may store at least one third cluster, which is generated by merging at least one first cluster and at least one second cluster detected based on the same face feature data among the plurality of first clusters generated through the operation of the first cluster generator 251 and the plurality of second clusters generated through the operation of the second cluster generator 253.

According to an embodiment, the memory 230 may store face feature data not clustered by the first cluster generator 251 in the unclassified state, and face feature data not clustered by the second cluster generator 253 in the unclassified state.

According to an embodiment, new face feature data may be stored in the memory 230.

According to an embodiment, the first AI model included in the first cluster generator 251 and the second AI model included in the second cluster generator 253 may be stored in the memory 230.

According to an embodiment, the display 260 (e.g., the display 160 of FIG. 1) may display a result of a face search performed based on a third cluster, which is generated by merging a first cluster and a second cluster.

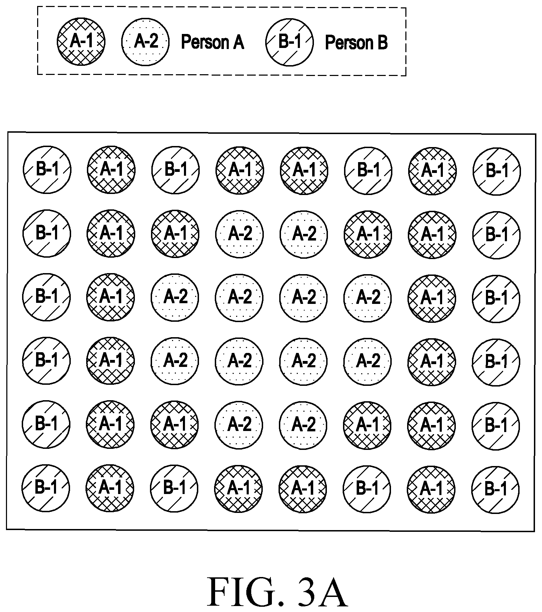

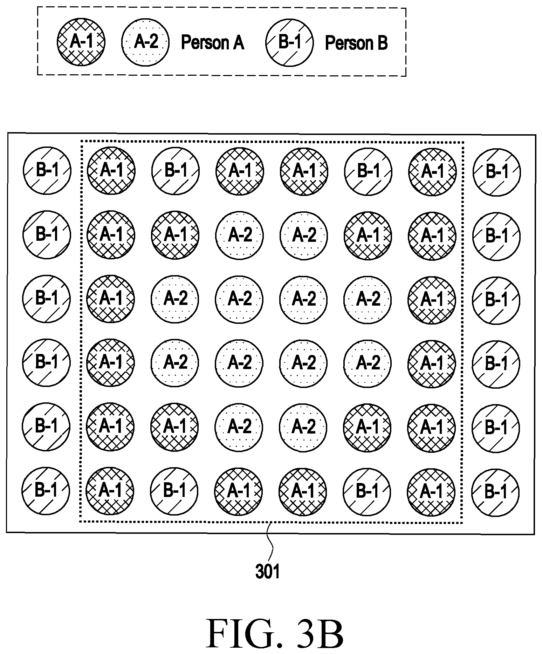

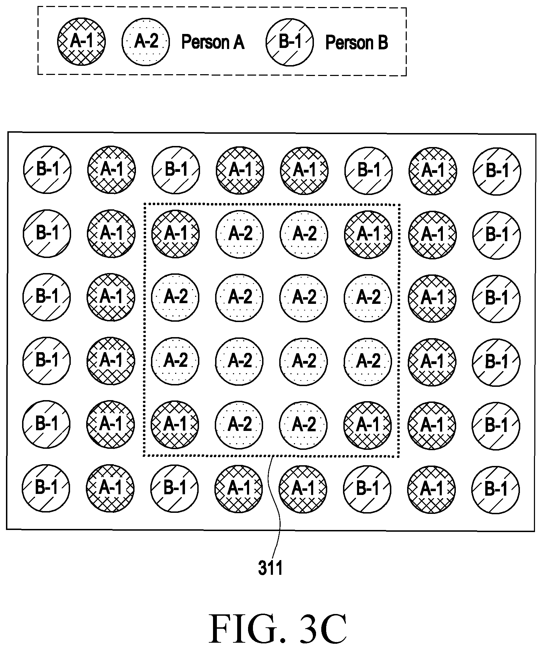

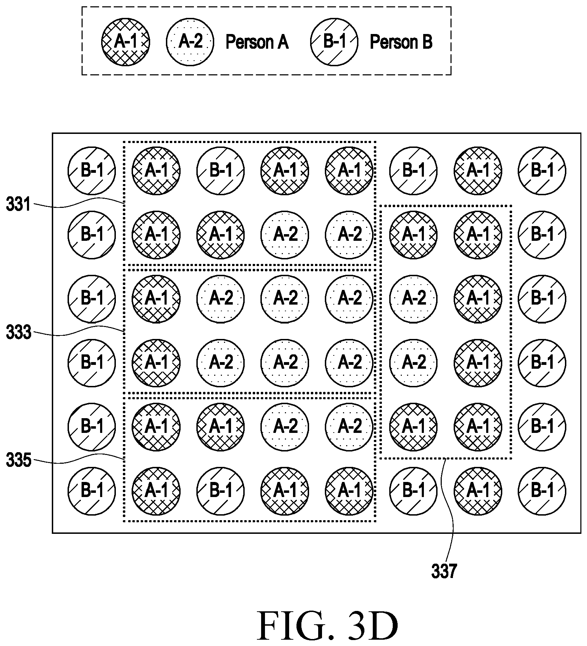

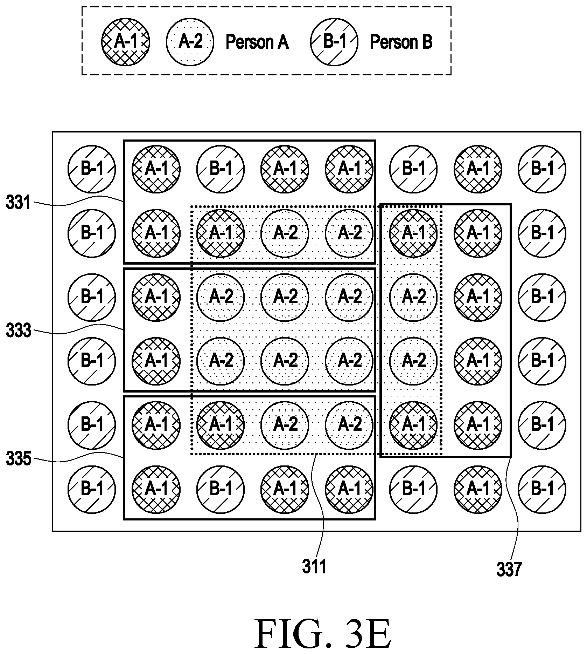

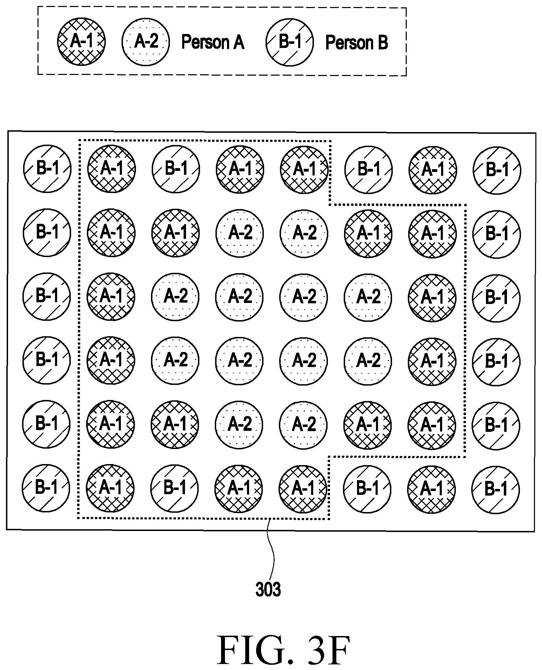

FIGS. 3A, 3B, 3C, 3D, 3E, and 3F are diagrams illustrating an operation of merging a first cluster and a second cluster in an electronic device according to an embodiment.

As illustrated in FIG. 3A, unclustered face feature data A-1 and A-2 of Person A and unclustered face feature data B-1 of Person B may be stored in the memory (e.g., the memory 230 of FIG. 2) of the electronic device (e.g., the electronic device 101 of FIG. 1 and/or the electronic device 201).

In the state illustrated in FIG. 3A, when clustering is performed on the face feature data of Person A using a commonly used clustering module, a cluster 301 including the face feature data of Person A may include four face feature data B-1 of another person, Person B, as illustrated in FIG. 3B.

In the state as illustrated in FIG. 3A, when clustering is performed based on Person A by driving the first cluster generator (e.g., the first cluster generator 251 of FIG. 2), at least one first cluster 311 including only the face feature data of Person A may be generated, as illustrated in FIG. 3C.

In the state as illustrated in FIG. 3A, when clustering is performed based on Person A by driving the second cluster generator (e.g., the second cluster generator 253 of FIG. 2), four second clusters 331, 333, 335, and 337 including the face feature data of Person A may be generated, as illustrated in FIG. 3D.

As illustrated in FIG. 3E, the electronic device may generate a third cluster 303 by merging the first cluster 311 and the four second clusters 331, 333, 335, and 337 including the face feature data of the same Person A, as illustrated in FIG. 3F. A comparison between the cluster 301 including the face feature data of Person A in FIG. 3B with the third cluster 303 in FIG. 3F reveals that the cluster 301 includes two face feature data B-1 of Person B, but the third cluster 303 includes only two face feature data B-1 of Person B.

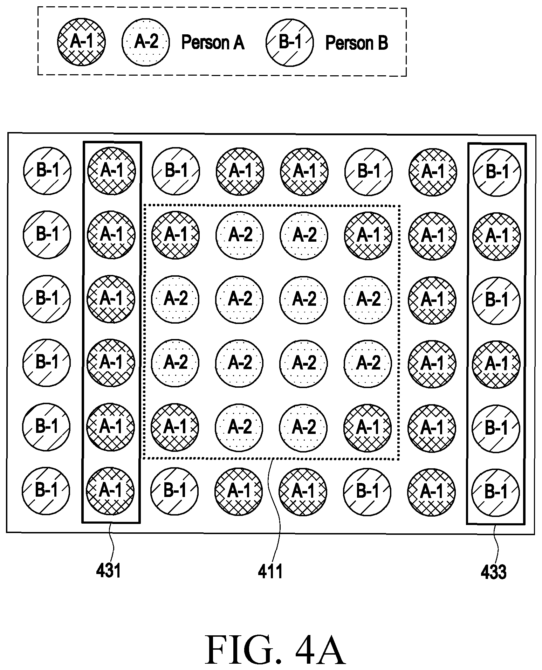

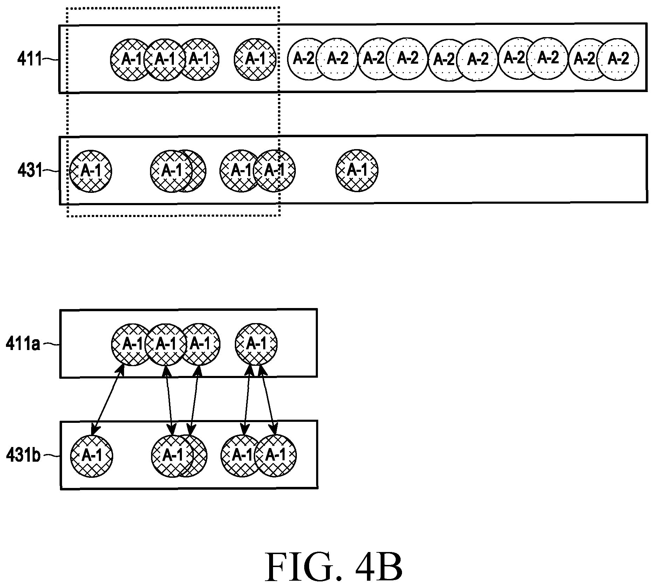

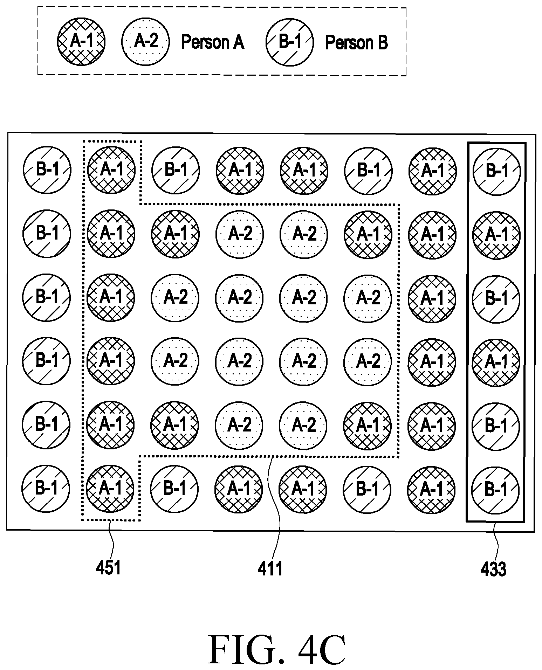

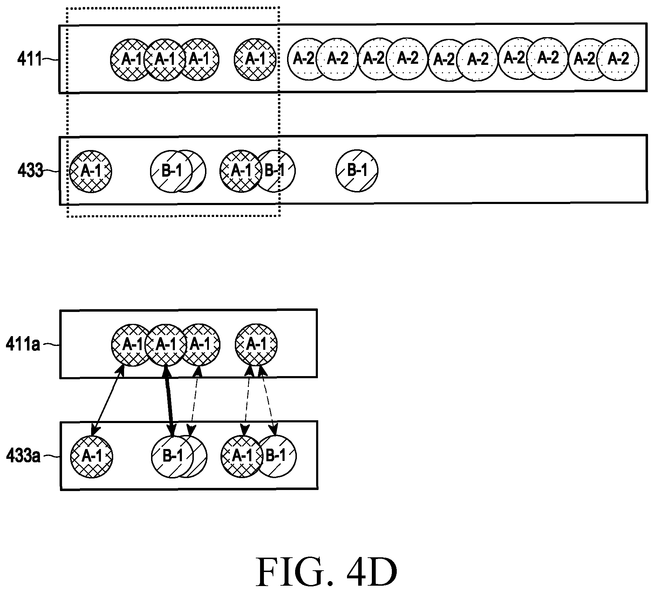

FIGS. 4A, 4B, 4C, and 4D are diagrams illustrating an operation of merging a first cluster and a second cluster in an electronic device according to an embodiment.

Referring to FIG. 4A, when the electronic device (e.g., the electronic device 101 of FIG. 1 and/or the electronic device 201) detects two second clusters 431 and 433 which are not merged with a plurality of first clusters generated by the first cluster generator (e.g., the first cluster generator 251 of FIG. 2), among a plurality of second clusters generated by the second cluster generator (e.g., the second cluster generator 253 of FIG. 2), the electronic device may identify a first cluster 411 to be compared with the two second clusters 431 and 433 based on time (e.g., an image acquisition date and/or an image acquisition time).

Referring to FIG. 4B, the electronic device may detect a fourth specified number of, that is, 4 face feature data 411a from the first cluster 411 based on the closest time, and a fifth specified number of, that is, 5 face feature data 431a from the second cluster 431 based on the closest time. When all calculated similarity scores between the 4 face feature data 411a detected from the first cluster 411 and the 5 face feature data 431a detected from the second cluster are equal to or greater than a reference score, the electronic device may generate a third cluster 451 by merging the first cluster 411 and the second cluster, as illustrated in FIG. 4C.

As illustrated in FIG. 4D, the electronic device may detect the four specified number of, that is, 4 face feature data 411a from the first cluster 411 based on the closest time and the fifth specified number of, that is, 5 face feature data 433a from the second cluster 433 based on the closest time. When at least one of the calculated similarity scores between the face feature data 411a detected from the first cluster and the face feature data 433a detected from the second cluster is less than or equal to the reference score, the electronic device may not merge the first cluster 411 and the second cluster.

An electronic device (the electronic device 101 of FIG. 1 or the electronic device 201 of FIG. 2) according to an embodiment may include a first cluster generator (the first cluster generator 251 of FIG. 2) configured to generate at least one first cluster including face feature data for each person, a second cluster generator (e.g., the second cluster generator 251 of FIG. 2) configured to generate a plurality of second clusters including face feature data for each person, a processor (e.g., the processor 120 of FIG. 1 and/or the processor 220 of FIG. 2), and memory (e.g., the memory 130 of FIG. 1 and/or the memory 230 of FIG. 2). According to an embodiment, the instructions may, when executed by the processor, cause the electronic device to, when a new second cluster is generated by the second cluster generator, compare a plurality of first clusters generated by the first cluster generator with the plurality of second clusters generated by the second cluster generator. According to an embodiment, the instructions may, when executed by the processor, cause the electronic device to, based on the comparison, generate a third cluster by merging a first cluster including first face feature data among the plurality of first clusters and a second cluster including the first face feature data among the plurality of second clusters.

The first cluster generator (e.g., the first cluster generator 251 of FIG. 2) according to an embodiment may include a first AI model configured to generate at least one first cluster including face feature data for each person, for precision. The second cluster generator (e.g., the second cluster generator 253 of FIG. 2) may include a second AI model configured to generate the plurality of second clusters including face feature data for each person, for precision and recall.

According to an embodiment, the instructions may, when executed by the processor, cause the electronic device to, when identifying that new face feature data is stored in the memory and at least one of a plurality of conditions for driving the first cluster generator is satisfied, drive the first cluster generator. The plurality of conditions for driving the first cluster generator according to an embodiment may include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

According to an embodiment, the instructions may, when executed by the processor, cause the electronic device to, using the first cluster generator (e.g., the first cluster generator 251 of FIG. 2), initialize a state of the new face feature data, a state of face feature data not clustered by the first cluster generator, and a state of face feature data included in the plurality of first clusters to an unclassified state. According to an embodiment, the instructions may, when executed by the processor, cause the electronic device to, using the first cluster generator, compare the unclassified new face feature data, the unclassified face feature data not clustered by the first cluster generator, and the unclassified face feature data included in the plurality of first clusters with each other. According to an embodiment, the instructions may, when executed by the processor, cause the electronic device to, using the first cluster generator, generate the plurality of first clusters including face feature data for each person based on the comparison.

According to an embodiment, the instructions may, when executed by the processor, cause the electronic device to drive the second cluster generator, when identifying that a specified number or more of new face feature data are stored in the memory.

According to an embodiment, the instructions may, when executed by the processor, cause the electronic device to, using the second cluster generator (e.g., the second cluster generator 253 of FIG. 2), initialize a state of the new face feature data and a state of face feature data not clustered by the second cluster generator to an unclassified state. According to an embodiment, the instructions may, when executed by the processor, cause the electronic device to, using the second cluster generator, detect at least one second cluster including a specified number or more of face data features among the plurality of second clusters stored in the memory. According to an embodiment, the instructions may, when executed by the processor, cause the electronic device to, using the second cluster generator, generate at least one new second cluster including the same face feature data as the face feature data included in the detected at least one second cluster among the initialized face feature data.

According to an embodiment, the instructions may, when executed by the processor, cause the electronic device to assign identification information of the third cluster to the third cluster, and the identification information of the third cluster may correspond to identification information of the merged first cluster.

According to an embodiment, the instructions may, when executed by the processor, cause the electronic device to, when identifying a second cluster, among the plurality of second clusters, that is not merged with the plurality of first clusters, identify a first cluster to be compared with the second cluster that is not merged with the plurality of first clusters based on time. According to an embodiment, the instructions may, when executed by the processor, cause the electronic device to, when a similarity score between face feature data included in the identified first cluster and face feature data included in the unmerged second cluster is equal to or greater than a reference score, generate a third cluster by merging the detected first cluster and the unmerged second cluster.

According to an embodiment, when the similarity score between the face feature data included in the identified first cluster and the face feature data included in the unmerged second cluster is less than the reference score, the first cluster and the unmerged second cluster may not be merged.

According to an embodiment, the instructions may, when executed by the processor, cause the electronic device to identify a first cluster, among the plurality of first clusters, including an image capture date or an image capture time which is the same as at least one of an image capture date or an image capture time of face feature data included in the unmerged second cluster.

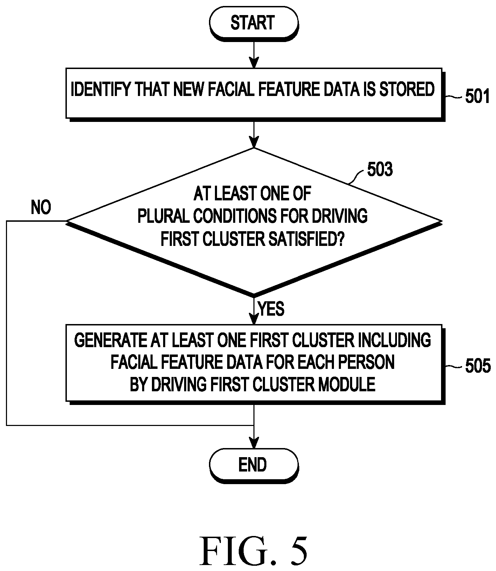

FIG 5 is a flowchart illustrating an operation of generating a first cluster by a first cluster generator in an electronic device according to an embodiment. The operation of generating a first cluster in the device may include operations 501 to 505. In the following embodiment, the respective operations may be performed sequentially, but not necessarily. For example, the order of the respective operations may be changed, at least two operations may be performed in parallel, or another operation may be added.

In operation 501, the electronic device (e.g., the electronic device 101 of FIG. 1 and/or the electronic device 201 of FIG. 2) may identify that new face feature data is stored.

According to an embodiment, the electronic device may receive a new image (e.g., via capturing and/or downloading), recognize a face from the new image, and upon detecting face feature data from the recognized face, store the detected face feature data in memory (e.g., the memory 230).

In operation 503, the electronic device (e.g., the electronic device 101 of FIG. 1 and/or the electronic device 201 of FIG. 2) may identify whether at least one of a plurality of conditions for driving a first cluster (e.g., the first cluster 251 of FIG. 2) is satisfied.

According to an embodiment, when at least one of the plurality of conditions for driving the first cluster generator is satisfied on a day when the new face feature data is stored, the electronic device may drive the first cluster.

The plurality of conditions for driving the first cluster generator according to an embodiment may include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

According to an embodiment, the electronic device may drive the first cluster in the background only once a day on the day when the new face feature data is stored in the memory (e.g., the memory 230 of FIG. 2). According to an embodiment, although it is described that the electronic device drives the first cluster generator 251 in the background only once a day on the day when the new face feature data is stored, the disclosure is not limited thereto. According to various circumstances such as the performance of the electronic device or user settings, the first cluster generator 251 may be driven in the background or foreground a specified number of times on a specified day other than the day when the new face feature data is stored.

In operation 503, when the electronic device identifies that at least one of the plurality of conditions for driving the first cluster is satisfied, In operation 505, the electronic device may generate at least one first cluster including face feature data for each person by driving the first cluster generator (e.g., the first cluster generator 251 of FIG. 2).

According to an embodiment, the first cluster generator may initialize a state of the new face feature data, a state of face feature data stored in the memory (e.g., the memory 230 of FIG. 2), which has not been clustered by the first cluster generator, and a state of face feature data included in each of the plurality of first clusters to an unclassified state.

According to an embodiment, the first cluster generator may assign an initialization value (e.g., cluster1_id_-1), as the unclassified state, to all of the new face feature data, the unclassified face feature data stored in the memory, which has not been clustered by the first cluster generator, and the face feature data included in each of the plurality of first clusters stored in the memory.

According to an embodiment, the first cluster generator may compare all of the face feature data initialized to the unclassified state with each other.

According to an embodiment, based on a result of the comparison, the first cluster generator may generate a new first cluster including face feature data identified as certain for each person, or update the existing plurality of first clusters stored in the memory by modifying them.

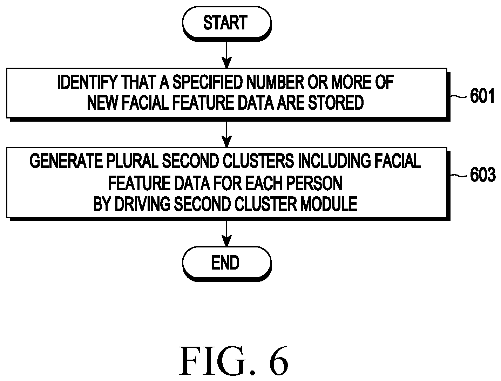

FIG. 6 is a flowchart illustrating an operation of generating a second cluster by a second cluster generator in an electronic device according to an embodiment. The operation of generating a second cluster in the device may include operations 601 to 603. In the following embodiment, the respective operations may be performed sequentially, but not necessarily. For example, the order of the respective operations may be changed, at least two operations may be performed in parallel, or another operation may be added.

In operation 601, the electronic device (e.g., the electronic device 101 of FIG. 1 and/or the electronic device 201 of FIG. 2) may identify that a specified number or more of new face feature data are stored.

According to an embodiment, the electronic device may receive a new image (e.g., via capturing and/or downloading), recognize a face from the new image, and upon detecting face feature data from the recognized face, store the detected face feature data in memory (e.g., the memory 230).

According to an embodiment, the electronic device may identify whether a second specified number (e.g., 10) or more of new face feature data have been stored in the memory 230.

In operation 603, the electronic device (e.g., the electronic device 101 of FIG. 1 and/or the electronic device 201 of FIG. 2) may generate a plurality of second clusters including face feature data for each person by driving the second cluster generator (e.g., the second cluster generator 253 of FIG. 2).

According to an embodiment, the second cluster generator may initialize a state of the new face feature data and a state of face feature data stored in the memory (e.g., the memory 230 of FIG. 3), which has not been clustered by the second cluster generator, to an unclassified state.

According to an embodiment, the second cluster generator may assign an initialization value (e.g., cluster2_id_-1) to the new face feature data stored in the memory, and assign the initialization value (e.g., cluster2_id_-1) to the face feature data stored in the memory, which remain unclassified because they were not clustered by the second cluster generator 253.

According to an embodiment, the second cluster generator may detect at least one second cluster including a third specified number (e.g., 10) or more of face feature data among the plurality of second clusters stored in the memory.

According to an embodiment, the second cluster generator may generate at least one new second cluster including face feature data determined to be identical to face feature data included in each of the at least one second cluster including the third specified number (e.g., 10) or more of face feature data among the face feature data assigned with the initialization value (e.g., cluster2_id_-1).

According to an embodiment, the second cluster generator may compare the face feature data assigned with the initialization value (e.g., cluster2_id_-1) with the face feature data included in each of at least one second cluster including the third specified number (e.g., 10) or fewer of face feature data among the plurality of second clusters stored in the memory. According to an embodiment, based on a result of the comparison, the second cluster generator may update at least one second cluster, which has face feature data identical to the face feature data assigned with the initialization value among the at least one second cluster including the third specified number (e.g., 10) or fewer of face feature data, by including new face feature data therein.

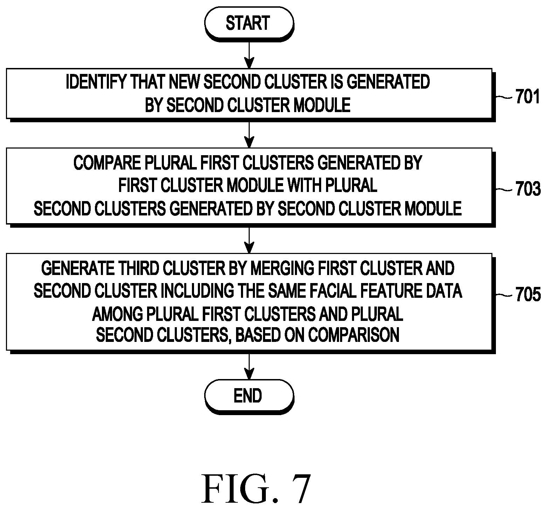

FIG. 7 is a flowchart illustrating an operation of clustering face feature data for each person in an electronic device according to an embodiment. The operation of clustering face feature data for each person in the device may include operations 701 to 708. In the following embodiment, the respective operations may be performed sequentially, but not necessarily. For example, the order of the respective operations may be changed, at least two operations may be performed in parallel, or another operation may be added.

In operation 701, the electronic device (e.g., the electronic device 101 of FIG. 1 and/or the electronic device 201 of FIG. 2) may identify that a new second cluster is generated by a second cluster generator (e.g., the second cluster generator 253 of FIG. 2).

According to an embodiment, the electronic device may identify that the new second cluster is stored in a second cluster DB (e.g., the second cluster DB 233) of memory (e.g., the memory 230 of FIG. 3).

In operation 703, the electronic device (e.g., the electronic device 101 of FIG. 1 and/or the electronic device 201 of FIG. 2) may compare a plurality of first clusters generated by a first cluster generator (e.g., the first cluster generator 251 of FIG. 2) with a plurality of second clusters generated by the second cluster generator.

In operation 705, the electronic device (e.g., the electronic device 101 of FIG. 1 and/or the electronic device 201 of FIG. 2) may generate a third cluster by merging, based on the comparison, a first cluster and a second cluster that include the same face feature data among the plurality of first clusters and the plurality of second clusters.

According to an embodiment, the electronic device may generate the third cluster by merging the first cluster and the second cluster that include the same face feature data among the plurality of first clusters and the plurality of second clusters.

According to an embodiment, the electronic device may detect a first cluster including first face feature data among the plurality of first clusters and at least one second cluster including the first face feature data among the plurality of second clusters, and generate a third cluster by merging the first cluster and the second cluster that include the same first face feature data.

According to an embodiment, the electronic device may store the third cluster in a third cluster DB (e.g., the third cluster DB 235) of the memory (e.g., the memory 230 of FIG. 3).

According to an embodiment, the electronic device may assign the same identification information (e.g., an identification number) of the merged first cluster to the generated third cluster.

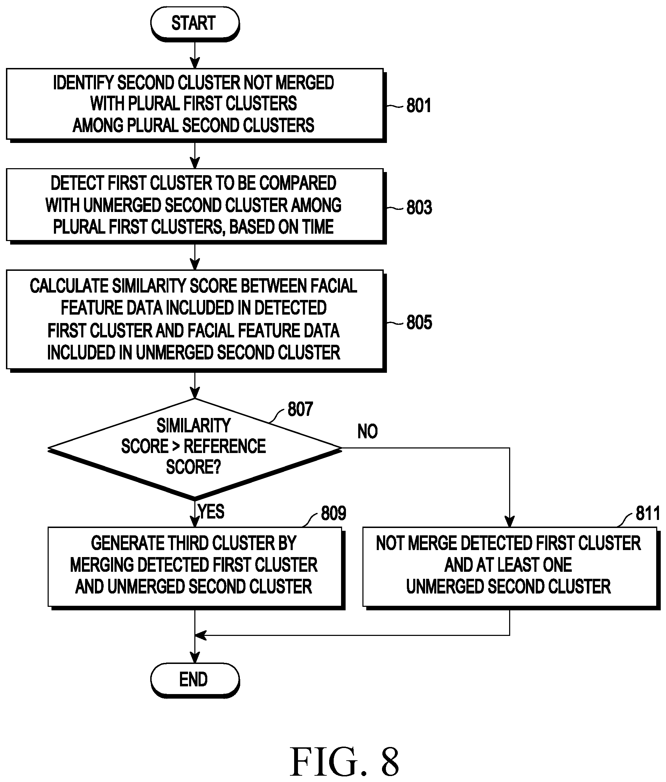

FIG. 8 is a flowchart illustrating an operation of clustering face feature data for each person in an electronic device according to an embodiment. The operation of clustering face feature data for each person in the device may include operations 801 to 811. In the following embodiment, the respective operations may be performed sequentially, but are not necessarily performed sequentially. For example, the order of the operations may be changed, at least two operations may be performed in parallel, or another operation may be added.

In operation 801, the electronic device (e.g., the electronic device 101 of FIG. 1 and/or the electronic device 201 of FIG. 2) may identify a second cluster that has not been merged with a plurality of first clusters, among a plurality of second clusters.

In operation 803, the electronic device may detect a first cluster, among the plurality of first clusters, to be compared with the unmerged second cluster based on time.

According to an embodiment, the electronic device may detect, as a first cluster to be compared with the unmerged second cluster, a first cluster having at least one of an image acquisition date or an image acquisition time that is the same as that of the unmerged second cluster based on a time criterion.

According to an embodiment, the electronic device may detect a second cluster to be compared with the unmerged second cluster based on not only the time criterion but also a location criterion and/or scene criterion of an image from which face feature data is detected.

In operation 805, the electronic device (e.g., the first electronic device 101 of FIG 1 and/or the electronic device 201 of FIG. 2) may calculate a similarity score between face feature data included in the detected first cluster and face feature data included in the unmerged second cluster.

According to an embodiment, the electronic device may calculate a similarity score between a fourth specified number (e.g., 3) of detected face feature data among the face feature data included in the detected first cluster and a fifth specified number (e.g., 5) of detected face feature data among the face feature data included in the unmerged second cluster.

In operation 807, the electronic device (e.g., the first electronic device 101 of FIG 1 and/or the electronic device 201 of FIG. 2) may compare the similarity score with a reference score.

In operation 807, When the similarity score is greater than or equal to the reference score, In operation 809, the electronic device may generate a third cluster by merging the detected first cluster and the unmerged second cluster.

According to an embodiment, when all similarity scores calculated between the face feature data included in the detected first cluster and the face feature data included in the unmerged second cluster are greater than or equal to the reference score (e.g., 75%), the electronic device may generate the third cluster by merging the detected first cluster and the unmerged second cluster.

According to an embodiment, when all similarity scores calculated between the fourth specified number (e.g., 3) of face feature data among the detected first cluster and the fifth specified number (e.g., 5) of face feature data among the unmerged second cluster are greater than or equal to the reference score (e.g., 75%), the electronic device may generate the third cluster by merging the detected first cluster and the unmerged second cluster.

According to an embodiment, the electronic device may store the third cluster in a third cluster DB (e.g., the third cluster DB 235) of the memory (e.g., the memory 230 of FIG. 3).

In operation 807, when the similarity score is less than or equal to the reference score, In operation 811, the electronic device does not merge the detected first cluster and the at least one unmerged second cluster.

According to an embodiment, when the similarity score calculated between the face feature data included in the detected first cluster and the face feature data included in the unmerged second cluster is less than or equal to the reference score (e.g., 75%), the electronic device may not merge the detected first cluster and the unmerged second cluster.

According to an embodiment, when there exists at least one face feature data for which a calculated similarity score between the face feature data included in the detected first cluster and the face feature data included in the unmerged second cluster is less than or equal to the reference score (e.g., 75%), the electronic device may not merge the detected first cluster and the unmerged second cluster.

According to an embodiment, when the similarity score calculated between the fourth specified number (e.g., 3) of face feature data among the detected first cluster and the fifth specified number (e.g., 5) of face feature data among the unmerged second cluster is less than or equal to the reference score (e.g., 75%), the electronic device may not merge the detected first cluster and the unmerged second cluster.

A method for clustering data in an electronic device (e.g., the electronic device 101 of FIG. 1 or the electronic device 201 of FIG. 2) according to an embodiment may include identifying that a new second cluster is generated by a second cluster generator configured to generate a plurality of second clusters including face feature data for each person. The method according to an embodiment may include comparing a plurality of first clusters generated by a first cluster generator configured to generate one first cluster including face feature data for each person with the plurality of second clusters generated by the second cluster generator. The method according to an embodiment may include, based on the comparison, generating a third cluster by merging a first cluster including first face feature data among the plurality of first clusters and a second cluster including the first face feature data among the plurality of second clusters.

In the method according to an embodiment, the first cluster generator may include a first AI model configured to generate at least one first cluster including face feature data for each person, for precision. In the method according to an embodiment, the second cluster generator may include a second AI model configured to generate the plurality of second clusters including face feature data for each person, for precision and recall.

The method according to an embodiment may include identifying that new face feature data is stored in memory of the electronic device. The method according to an embodiment may further include, when at least one of a plurality of conditions for driving the first cluster generator is satisfied, driving the first cluster generator. In the method according to an embodiment, the plurality of conditions for driving the first cluster generator may include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

The method according to an embodiment may include initializing a state of the new face feature data, a state of face feature data not clustered by the first cluster generator, and a state of face feature data included in the plurality of first clusters to an unclassified state, by the first cluster generator. The method according to an embodiment may include comparing the unclassified new face feature data, the unclassified face feature data not clustered by the first cluster generator, and the unclassified face feature data included in the plurality of first clusters with each other, by the first cluster generator. The method according to an embodiment may further include, based on the comparison, generating the plurality of first clusters including face feature data for each person by the first cluster generator.

The method according to an embodiment may further include driving the second cluster generator, when identifying that a specified number or more of new face feature data are stored in the memory.

The method according to an embodiment may include initializing a state of the new face feature data and a state of face feature data not clustered by the second cluster generator to an unclassified state, by the second cluster generator. The method according to an embodiment may include detecting at least one second cluster including a specified number or more of face data features among the plurality of second clusters stored in the memory, by the second cluster generator. The method according to an embodiment may further include generating at least one new second cluster including the same face feature data as the face feature data included in the detected at least one second cluster among the initialized face feature data, by the second cluster generator.

The method according to an embodiment may further include assigning identification information of the third cluster to the third cluster, and the identification information of the third cluster may correspond to identification information of the merged first cluster.

The method according to an embodiment may include, when identifying a second cluster, among the plurality of second clusters, that is not merged with the plurality of first clusters, identifying a first cluster to be compared with the second cluster that is not merged with the plurality of first clusters based on time.

The method according to an embodiment may further include, when a similarity score between face feature data included in the identified first cluster and face feature data included in the unmerged second cluster is equal to or greater than a reference score, generate a third cluster by merging the detected first cluster and the unmerged second cluster.

The method according to an embodiment may further include, when the similarity score between the face feature data included in the identified first cluster and the face feature data included in the unmerged second cluster is less than the reference score, not merging the first cluster and the unmerged second cluster.

The method according to an embodiment may further include detecting a first cluster, among the plurality of first clusters, including an image capture date or an image capture time which is the same as at least one of an image capture date or an image capture time of face feature data included in the unmerged second cluster.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1; 201 of FIG. 2) comprising:
a first cluster generator (251 of FIG. 2) configured to generate at least one first cluster including face feature data for each person;
a second cluster generator (251 of FIG. 2) configured to generate a plurality of second clusters including face feature data for each person;
a processor (120 of FIG. 1; 220 of FIG. 2); and
memory (130 of FIG. 1; 230 of FIG. 2) storing instructions that, when executed by the processor, cause the electronic device to:
when a new second cluster is generated by the second cluster generator, compare a plurality of first clusters generated by the first cluster generator with the plurality of second clusters generated by the second cluster generator, and
based on the comparison, generate a third cluster by merging a first cluster including first face feature data among the plurality of first clusters and a second cluster including the first face feature data among the plurality of second clusters.

2. The electronic device of claim 1, wherein the first cluster generator includes a first artificial intelligence model configured to generate at least one first cluster including face feature data for each person, for precision, and
wherein the second cluster generator includes a second artificial intelligence model configured to generate the plurality of second clusters including face feature data for each person, for precision and recall.

3. The electronic device of claim 1 or 2, wherein the instructions, when executed by the processor, cause the electronic device to, when identifying that new face feature data is stored in the memory and at least one of a plurality of conditions for driving the first cluster generator is satisfied, drive the first cluster generator, and
wherein the plurality of conditions for driving the first cluster generator include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

4. The electronic device of any one of claims 1 to 3, wherein the instructions, when executed by the processor, cause the electronic device to, using the first cluster generator:
initialize a state of the new face feature data, a state of face feature data not clustered by the first cluster generator, and a state of face feature data included in the plurality of first clusters to an unclassified state,
compare the unclassified new face feature data, the unclassified face feature data not clustered by the first cluster generator, and the unclassified face feature data included in the plurality of first clusters with each other, and
based on the comparison, generate the plurality of first clusters including face feature data for each person.

5. The electronic device of any one of claims 1 to 4, wherein the instructions, when executed by the processor, cause the electronic device to drive the second cluster generator, when identifying that a specified number or more of new face feature data are stored in the memory.

6. The electronic device of any one of claims 1 to 5, wherein the instructions, when executed by the processor, cause the electronic device to, using the second cluster generator:
initialize a state of the new face feature data and a state of face feature data not clustered by the second cluster generator to an unclassified state,
detect at least one second cluster including a specified number or more of face data features among the plurality of second clusters stored in the memory, and
generate at least one new second cluster including the same face feature data as the face feature data included in the detected at least one second cluster among the initialized face feature data.

7. The electronic device of any one of claims 1 to 6, wherein the instructions, when executed by the processor, cause the electronic device to assign identification information of the third cluster to the third cluster, and
wherein the identification information of the third cluster corresponds to identification information of the merged first cluster.

8. The electronic device of any one of claims 1 to 7, wherein the instructions, when executed by the processor, cause the electronic device to:
when identifying a second cluster, among the plurality of second clusters, that is not merged with the plurality of first clusters, identify a first cluster to be compared with the second cluster that is not merged with the plurality of first clusters based on time, and
when a similarity score between face feature data included in the identified first cluster and face feature data included in the unmerged second cluster is equal to or greater than a reference score, generate a third cluster by merging the detected first cluster and the unmerged second cluster.

9. The electronic device of any one of claims 1 to 8, wherein when the similarity score between the face feature data included in the identified first cluster and the face feature data included in the unmerged second cluster is less than the reference score, the first cluster and the unmerged second cluster are not merged.

10. The electronic device of any one of claims 1 to 9, wherein the instructions, when executed by the processor, cause the electronic device to identify a first cluster, among the plurality of first clusters, including an image capture date or an image capture time which is the same as at least one of an image capture date or an image capture time of face feature data included in the unmerged second cluster.

11. A method for clustering data in an electronic device, comprising:
identifying that a new second cluster is generated by a second cluster generator configured to generate a plurality of second clusters including face feature data for each person;
comparing a plurality of first clusters generated by a first cluster generator configured to generate one first cluster including face feature data for each person with the plurality of second clusters generated by the second cluster generator; and
based on the comparison, generating a third cluster by merging a first cluster including first face feature data among the plurality of first clusters and a second cluster including the first face feature data among the plurality of second clusters.

12. The method of claim 11, wherein the first cluster generator includes a first artificial intelligence model configured to generate at least one first cluster including face feature data for each person, for precision, and
wherein the second cluster generator includes a second artificial intelligence model configured to generate the plurality of second clusters including face feature data for each person, for precision and recall.

13. The method of claim 11 or 12, further comprising:
identifying that new face feature data is stored in memory of the electronic device; and
when at least one of a plurality of conditions for driving the first cluster generator is satisfied, driving the first cluster generator,
wherein the plurality of conditions for driving the first cluster generator include a condition in which the electronic device is in a charging state while being in a screen off state, a condition in which a temperature of the electronic device is equal to or less than a reference temperature, a condition in which a battery level of the electronic device is equal to or greater than a reference level, and a condition in which a specified time elapses after screen-off of the electronic device.

14. The method of any one of claims 11 to 13, further comprising:
initializing a state of the new face feature data, a state of face feature data not clustered by the first cluster generator, and a state of face feature data included in the plurality of first clusters to an unclassified state, by the first cluster generator;
comparing the unclassified new face feature data, the unclassified face feature data not clustered by the first cluster generator, and the unclassified face feature data included in the plurality of first clusters with each other, by the first cluster generator; and
based on the comparison, generating the plurality of first clusters including face feature data for each person by the first cluster generator.

15. A non-transitory storage medium storing instructions that, when executed by an electronic device, cause the electronic device to perform at least one operation,
wherein the at least one operation includes:
identifying that a new second cluster is generated by a second cluster generator configured to generate a plurality of second clusters including face feature data for each person;
comparing a plurality of first clusters generated by a first cluster generator configured to generate one first cluster including face feature data for each person with the plurality of second clusters generated by the second cluster generator; and
based on the comparison, generating a third cluster by merging a first cluster including first face feature data among the plurality of first clusters and a second cluster including the first face feature data among the plurality of second clusters.
